# EUROPEAN PATENT SPECIFICATION

(11) **EP 0 615 678 B1**
(45) Date of publication and mention of the grant of the patent: **09.07.1997**
(21) Application number: 92923646.1
(22) Date of filing: 02.12.1992
(51) Int. Cl.: H05K 3/34, B23K 1/012, B23K 3/00

(54) **A PROCESS AND AN APPARATUS FOR WAVE SOLDERING**
PROZESS UND VORRICHTUNG ZUM WELLENLÖTEN.
PROCEDE ET APPAREIL DE BRASAGE A LA VAGUE

(30) Priority: 06.12.1991 US 804904; 30.03.1992 US 860316; 15.10.1992 US 961781
(43) Date of publication of application: 21.09.1994
(73) Proprietor: ELECTROVERT LIMITED, La Prairie, Quebec J5R 2E4 (CA)
(72) Inventor: GILETA, John, Harry, Chateauguay, Quebec J6K 2T3 (CA); CHARTRAND, Raymond, Joseph, Texas 76063 (US); SELLEN, Derek, Edward, Texas 75071 (US)
(74) Representative: Warren, Keith Stanley
(86) International application number: PCT/CA92/00523
(87) International publication number: WO 93/11653

(56) References cited:
- US-A- 4 402 448
- US-A- 4 538 757
- US-A- 5 044 542
- US-A- 5 048 746
- US-A- 5 121 874

## Description

The present invention relates to wave soldering of elements such as printed wiring boards and more specifically to solder coating of wettable metallic surfaces for joining at least two wettable metallic surfaces on wiring boards in a solder wave wherein the wave is blanketed with a reduced oxygen gas atmosphere.

Printed wiring boards, circuit boards and other elements now have smaller wettable surfaces to be solder coated and joined. Whereas in the past flux was used to remove oxides from these surfaces, it has now been found that if soldering occurs within an inert gas or a shield gas atmosphere which excludes oxygen, then flux may not be necessary. In the present application, the term "inert" as applied to gas includes nitrogen. Furthermore dross and other oxides do not form on the surface of solder in an inert atmosphere. In the past dross and oxide particles have caused skips, bridges, or other defects to occur in soldered joints.

In US,A,5,048,746 is disclosed a tunnel for fluxless soldering. In US,A,5,044,542 is shown shield gas wave soldering. In both cases solder is applied to an element in a shield gas environment. The shield gas may be inert gas or a reducing gas which excludes oxygen. The benefits of soldering in an atmosphere which excludes oxygen are known.

Tardoskegyi in US,A,3,705,457 and Elliott in U.S. patent application Serial No. 549,603 both disclose the use of a gas knife jet. US,A, 4,402,448, 4,679,720 and 4,995,411 disclose the uses of gas or air knife jets for cleaning surface mounted conductor elements carried by printed circuit boards.

One of the problems with flux in the past is that the flux itself caused a deposit or residue on the solder coated surfaces after solder coating and this residue generally had to be removed by cleaning after soldering. However, flux technology has improved and it is now possible to use what is sometimes referred to as a "no-clean" flux which does not leave a residue and does not require solder coated surfaces to be cleaned after solder coating. The term "no-clean" flux is applied to a flux which leaves a low level of residue on solder, the residue generally being non-corrosive and non-conductive. One example of a no-clean flux contains little or no halide, another example is a non-corrosive and non-conductive organic acid dissolved in an ethanol or isopropanol solvent. A further example is common RMA flux which is a mixture of a rosin, such as abietic acid, an activator, such as divethylamine hydrochloride and solvent such as alcohol.

The addition of a small quantity of adipic acid with a solvent such as ethyl or isopropyl alcohol results in a no-clean flux. Furthermore, it is known that low dross solder, which contains from about 10 to 1000 ppm phosphorous, reduces dross formation in a solder pot exposed to air. By utilizing a low dross solder it has been found that the shield gas used to blanket a solder wave during solder coating does not require all oxygen to be removed from the atmosphere. A satisfactory solder coating can be obtained with low dross solder when an oxygen content of about 5% is included in the shield gas. In some situations oxygen contents greater than 5% are satisfactory. Thus the cost of a shield gas is greatly reduced, and this results in savings in the soldering process.

The present invention consists in an apparatus for wave soldering an element comprising a solder reservoir adapted to contain molten solder and having at least one solder wave nozzle projecting therefrom, pump means for forming a solder wave from the nozzle, cover means for covering at least a portion of the reservoir having at least one longitudinal slot for the solder wave to pass therethrough, supply means for supplying pressurized gas to the underside of the cover means, the gas being permitted to pass upwards through the slot on both sides of the solder wave and provide a gas blanket over the solder wave, and conveyor means for moving the element in a predetermined path over the cover means ensuring at least a portion of the element passes through the solder wave.

The present invention also consists in a process for wave soldering an element comprising the steps of projecting a solder wave from a solder nozzle above a solder reservoir and through a slot in a cover means, providing a shield gas supply underneath the cover means on both sides of the solder wave to pass through the slot on both sides of the solder wave and blanket the solder wave, and passing the element in a predetermined path above the cover means so that at least a portion of the element passes through the solder wave while being blanketed by the shield gas.

With the present invention, it has been discovered that by utilizing a cover, shroud or the like at least partially covering the solder reservoir and blanketing the solder wave with a shield gas from within, one is able to reduce air to almost negligible amounts from the solder wave and around the element to be soldered, such as, a wiring board. Thus, wettable surfaces to be solder coated, such as circuit tracks, pads and metallized holes in the board with pins therein are kept substantially free of air. Furthermore the solder surface under the cover, and the solder wave surface are kept free of air avoiding dross forming on the solder wave and in many cases avoiding the necessity of having to use flux in the solder coating step.

At least one and, preferably, two or more solder nozzles, are used and each solder wave may have its own independent wave height control and shield gas flow control. Several narrow solder waves are easier to blanket with shield gas rather than one single large solder wave. A gas knife which can be adjusted and may be heated may be incorporated into the cover or shroud or be located beyond the solder reservoir. The gas knife supplies hot air or hot gas, dependent upon the particular use to which it is to be put, to remove excess solder on elements that have been solder coated.

In one embodiment of the present invention a cover is provided to cover the complete solder reservoir, blanketing not only the solder wave but also the reservoir, thus avoiding substantially all air from coming in contact with the solder surface. By utilizing a cover, only a small space has to be kept completely air free which is an easier proposition than when tunnels, hoods or enclosures and the like are used surrounding a solder wave. It has been found that oxygen content under a cover over a solder reservoir and blanketing a solder wave is reduced as illustrated in the embodiments described herein.

By utilizing smaller space under a cover and for blanketing a solder wave, less gas is used, thus reducing one of the costs of soldering.

In another embodiment using a nitrogen environment, an inspecting panel was provided in the cover over the solder reservoir, and it was seen that the solder had a silver reflective surface and had no dross or other oxides formed thereon. Furthermore, tests conducted with printed circuit boards having metallized holes therein provided good wicking of the solder up into the holes and good wetting of the solder on the metallized surfaces.

In the accompanying drawings which illustrate embodiments of the present invention,

Figure 1 is a sectional view through a solder reservoir having a solder wave nozzle therein and with a cover plate arrangement according to one embodiment of the present invention.

Figure 2 is a sectional view through a solder reservoir having two solder wave nozzles therein and a cover plate extending over the reservoir having slots therein for the solder waves.

Figure 3 is a sectional view through a solder reservoir having two solder waves therein with a cover plate over the solder reservoir and including a horizontal conveyor within a tunnel having heaters positioned to preheat elements advancing on the conveyor through the solder waves.

Figure 4 is a sectional view through a solder wave showing gas knife jets directing gas into the slot on both sides of the solder wave.

Figure 5 is a sectional view showing a solder wave having a shroud with gas diffusers therein.

Figure 6 is an isometric view with a tray in dotted line above a cover plate for two solder waves.

Figure 7 is a sectional view taken at line 7-7 of Figure 6.

Figure 8 is a sectional view of another embodiment of a cover plate for two solder waves.

Figure 8A is a detail sectional view of another embodiment of a cover plate similar to that shown in Figure 8.

Figure 9 is a sectional view through a solder reservoir having two hollow wave nozzles therein and a cover plate extending over the reservoir having slots therein for the solder waves.

Figure 10 is a sectional view showing another hollow wave nozzle and a cover plate.

Figure 11 is a sectional view through a solder reservoir with a solder wave nozzle similar to that shown in Figure 1 with a diffuser arrangement on top of the cover plate to provide laminar flow across the surface of the solder wave.

Figure 12 is a diagrammatical side view showing a conveyor for passing elements substantially horizontally over a fluxer, a preheater, through two shrouded solder waves and past a gas knife to clean excess solder off the elements.

Figure 13 is a partial sectional view showing two shrouded solder waves above a solder reservoir with a gas knife positioned on one end of a shroud after the second solder wave, the conveyor is inclined upwards.

Figure 14 is the diagrammatical side view of Figure 1 with an enclosure over the fluxer and preheater.

Figure 15 is the diagrammatical side view of Figure 1 with an enclosure over the solder reservoir only.

Figure 16 is the diagrammatical side view of Figure 1 with an enclosure extending over the fluxer, preheater and solder reservoir.

Figure 17 is a partial sectional view showing a shrouded solder wave according to another embodiment of the present invention, the solder wave being streamline and having a substantial even flow on input and exit sides.

Figure 18 is a partial sectional view showing two shrouded solder waves according to a further embodiment of the present invention.

Figure 19 is a partial sectional view showing two shrouded solder waves according to a still further embodiment of the present invention.

Figure 20 is a partial sectional view showing a shrouded solder wave with a gas knife according to yet another embodiment of the present invention.

Figure 21 is a partial sectional view showing two solder waves similar to Figure 8 and including covers positioned over each solder wave.

Figure 22 is a partial sectional view showing two solder waves with a gas knife after the second wave and having a flexible seal flap between the gas knife and the shroud.

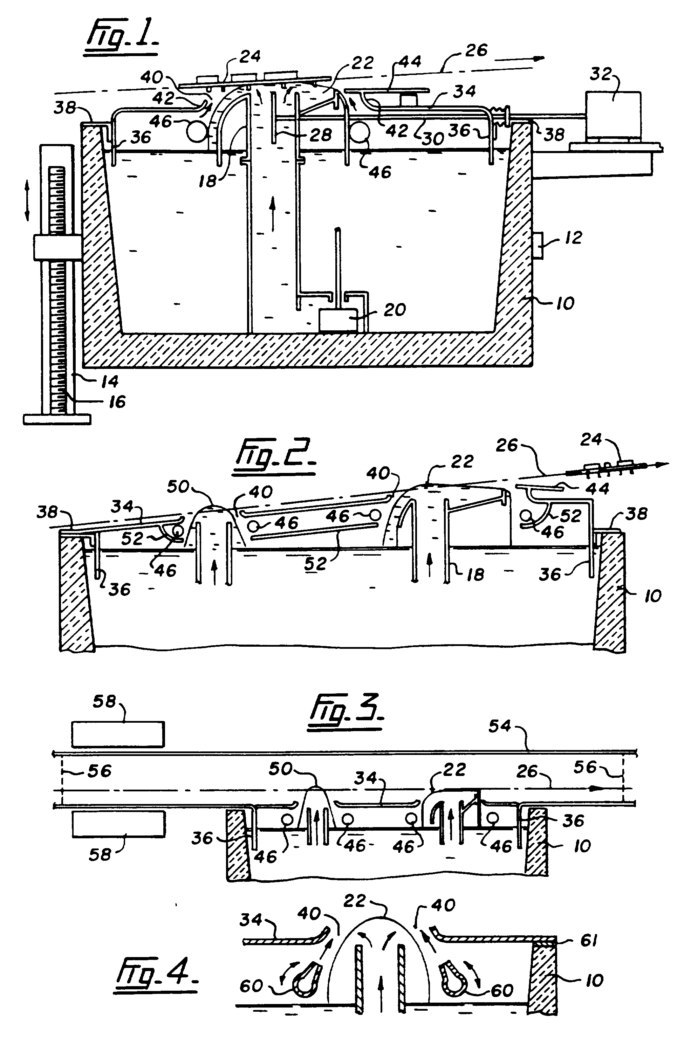

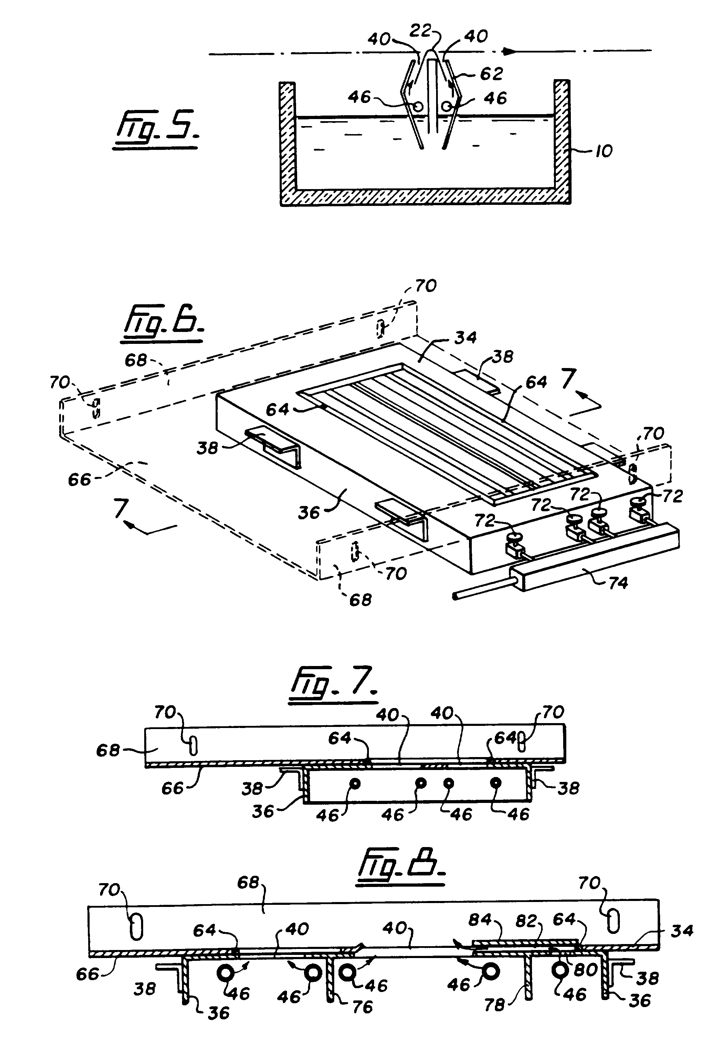

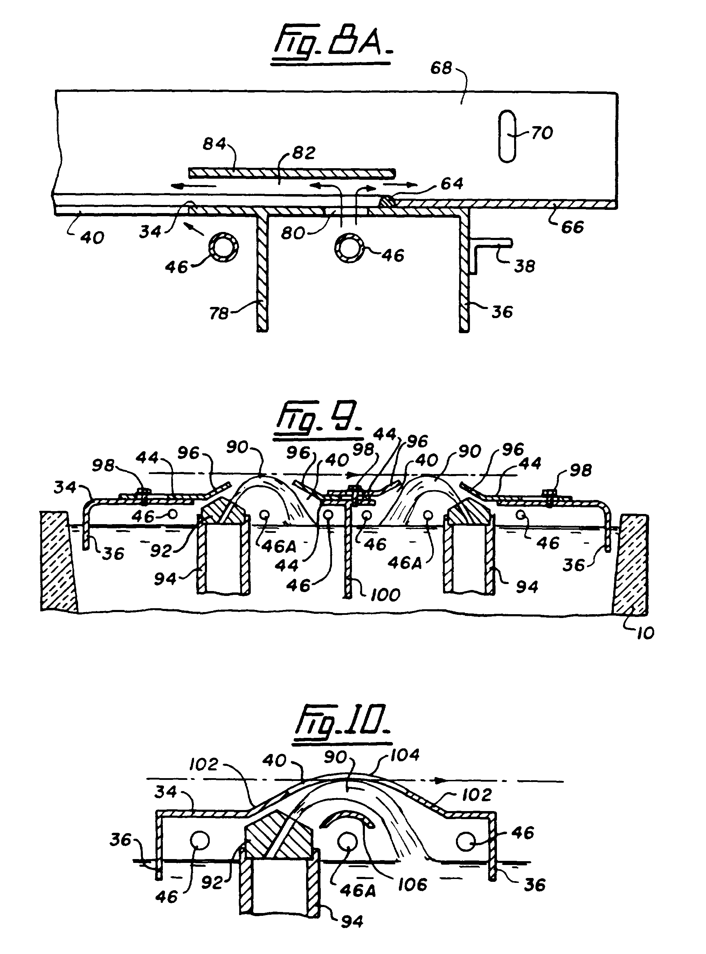

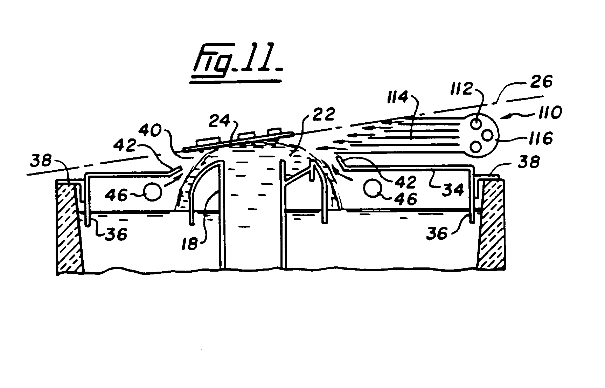

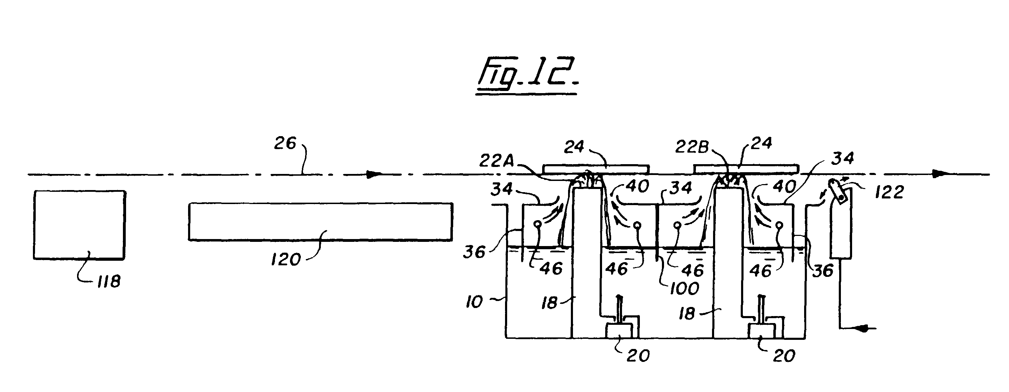

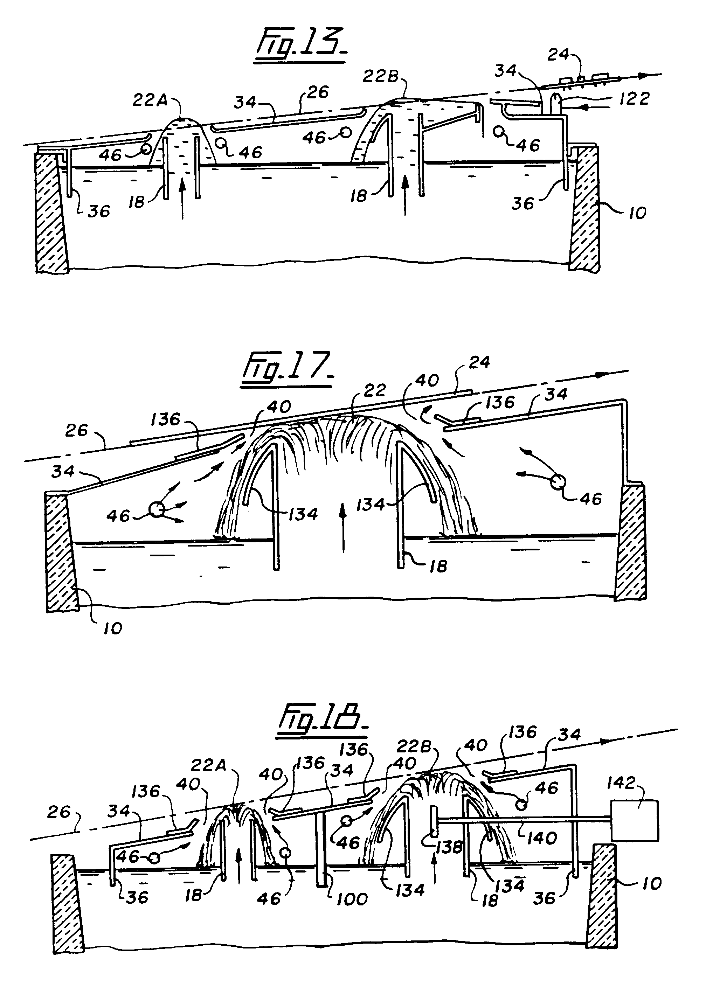

A solder reservoir 10 is shown in Figure 1 supported by a support frame 12 which in turn is connected to a screw jack 14 having a screw 16 that can be rotated to lower and then raise the solder reservoir 10. The reservoir 10 is shown in the position for wave soldering, and can be lowered for maintenance purposes.

In the solder reservoir 10 a solder nozzle 18 extends up above the solder level and a pump 20 pumps solder up through nozzle 18 to form a solder wave 22. The solder wave 22 illustrated is similar to that shown in US,A,3,921,888 and provides a smooth laminar flow solder wave 22 which is non-turbulent. An element 24 such as a printed circuit board is shown passing in a conveyor path 26 so that at least a portion of the board 24 passes through the solder wave 22. In some cases the solder wave is arranged to only contact the underside of the board 24, however, the height of the solder wave can be adjusted by varying the pump flow and/or by raising and lowering the reservoir 10 to suit the different soldering requirements.

A vibrator plate 28 in the nozzle 18 is attached to a rod 30 connecting to a vibrator 32 to provide an oscillation or vibration to the solder wave 22 during the passage of a printed wiring board therethrough. The vibratory arrangement is disclosed in US,A, 4,684,056. The oscillation or vibration aids in filling or wicking up into small holes in the boards. Crevices and corners adjacent to a solder mask are also solder wetted, as well as all other areas where solder wetting is difficult to achieve by conventional machines.

A cover plate 34 is shown over the top of the solder reservoir 10, and has skirts 36 which extend around the perimeter of the plate and extend down into the solder in the reservoir 10 to provide a seal thus providing a contained space under the cover plate 34. Brackets 38 support the cover plate 34 on the sides of the reservoir 10. The cover plate 34 has a longitudinal slot 40 which extends along the solder wave and provides an aperture through which the solder wave projects. Lips 42 are shown around the edges of the slot 40 to provide a curved edge. The lips 42 are not always necessary as will be seen in the later drawings. On the downstream side of the solder wave 22, a sliding damper plate 44 is provided to reduce the size of the gap adjacent the downstream side of the solder wave 22. In certain solder waves, the slot 40 extends around the ends as well as the sides. A supply of gas may be supplied if necessary to ensure that the slot at the ends has gas flowing out to blanket the ends as well as the sides of the solder wave.

Gas pipes 46 are shown positioned on each side of the solder wave 24 under the cover plate 34. The gas pipes 46 may be gas diffusers or, alternatively, may be pipes with holes therein. They are positioned as close to the solder wave as possible and in some instances the solder may touch or even flow over the gas pipes 46. Gas is supplied to the gas pipes 46 and the gas flows upwards through the slot 42 on each side of the solder wave 22, thus enveloping or blanketing the solder wave 22. When a circuit board 24 passes through the solder wave, the board forms a reaction wall and the gas not only covers the solder wave but also provides a canopy which surrounds the circuit board 24 or element passing through the solder wave. In this manner the gas atmosphere blankets not only the surface of the reservoir within the cover plate 34 but also blankets the surface of the solder wave and provides a canopy over circuit boards or other elements passing through the solder wave 22.

The type of gas used to blanket the solder wave may be an inert gas such as nitrogen, a shield gas, a treatment gas, or reducing gas may be used. In all cases oxygen is excluded to achieve reliable soldering, and preferably to the smallest amount possible. The gas may include additives which are desirable for solder coating of wettable metallic surfaces or for joining at least two wettable metallic surfaces.

Low dross solder contains a phosphorous concentration generally in the range of about 10 to 1000 ppm. One example of a low dross solder is sold by Alpha Metals under their tradename HI FLO Alloy 63/37. When this solder is used in an atmosphere with a reduced oxygen content, then it is found that solder bridging and excessive solder deposits on metallized surfaces no longer occurs, or at least is reduced. Furthermore, whereas in the past in order to attain reduction in solder dross, it was necessary to have a pure nitrogen atmosphere. This is no longer required and oxygen contents of up to 10,000 ppm (5%) are satisfactory for reduction in dross, furthermore bridging and excessive solder deposits are eliminated or at least reduced. When oxygen is reduced to 5% or less in a shield gas, dross formation is reduced even utilizing the low dross solder. Thus use of low dross solder eliminates the need to inert the solder waves with a high purity nitrogen or a more expensive inert gas such as argon. By using nitrogen or another inert gas with a higher oxygen content, one reduces the cost of the gas. Pure nitrogen is expensive whereas a lower purity of nitrogen is far cheaper. Nitrogen can be produced from air using membrane technology. Such a process retains some oxygen content but generally less than 10,000 ppm (5%) which is satisfactory for use with the present invention. The oxygen content of the shield gas, primarily nitrogen is preferably in the range of 1 to 50,000 ppm (5%) and in a specific preferred embodiment 10 to 1,000 ppm.

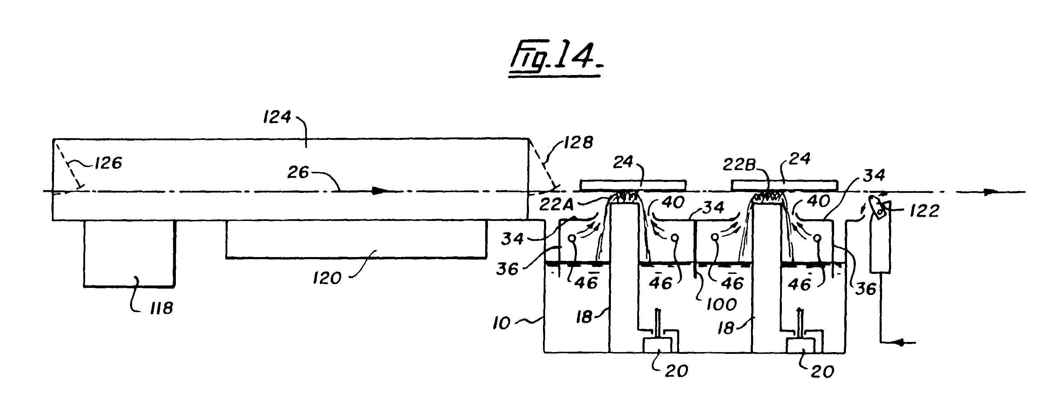

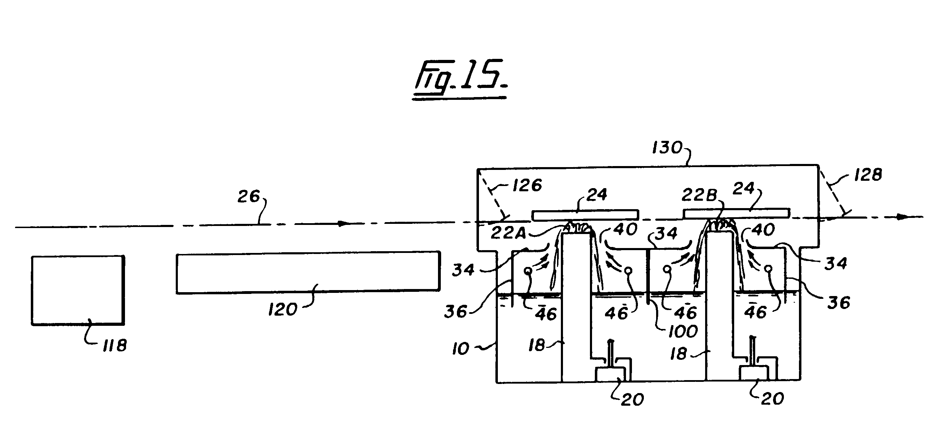

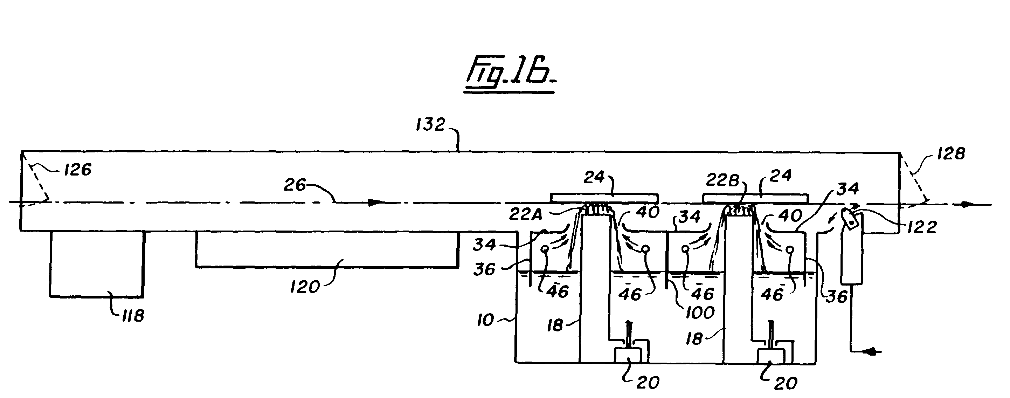

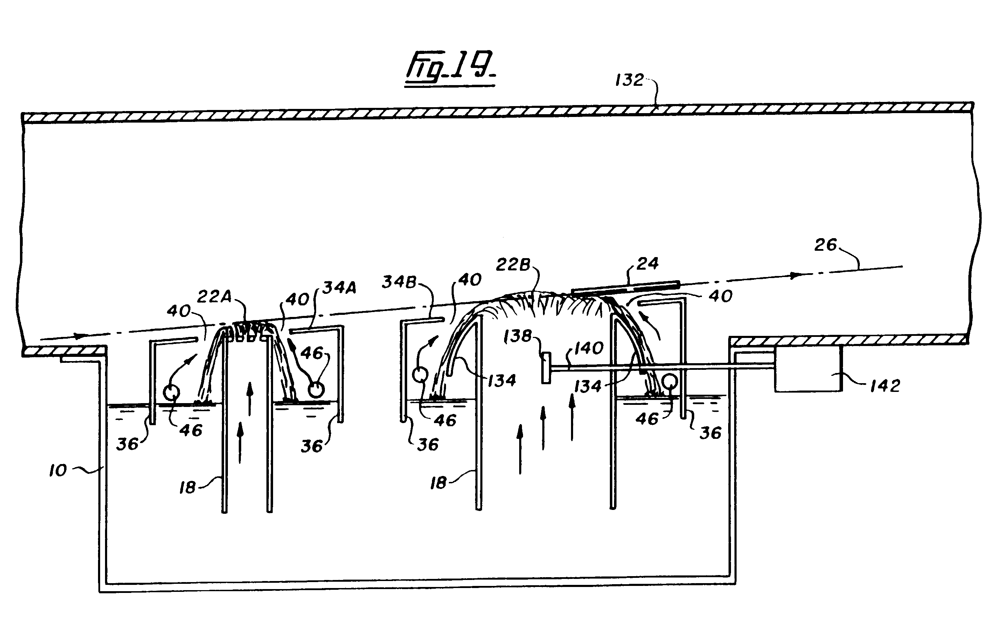

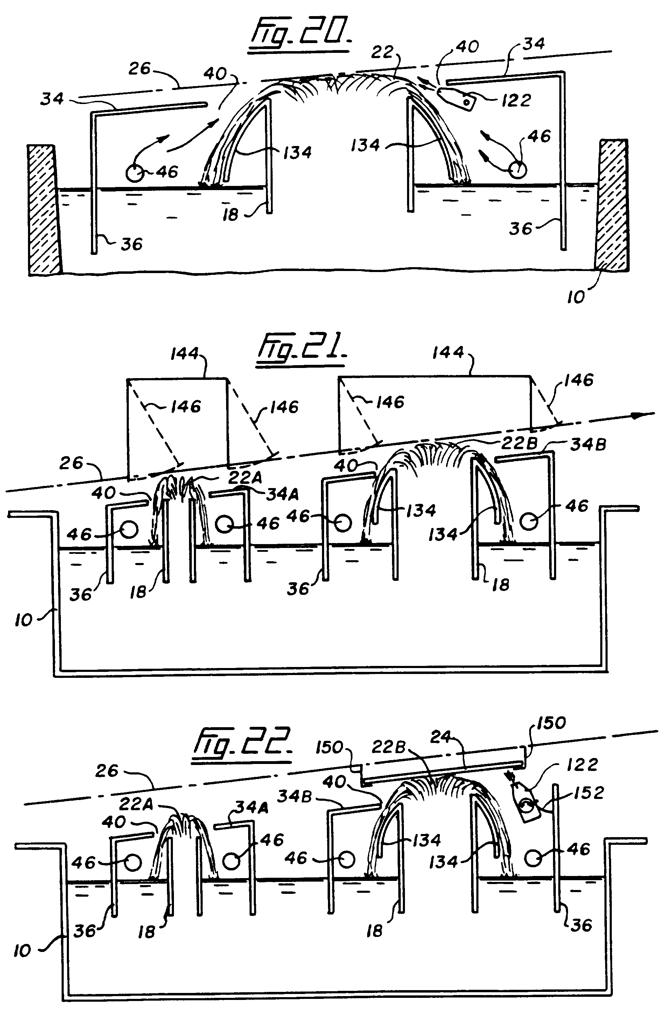

Whereas Figure 1 illustrates a non-turbulent solder wave, other types of solder waves may be used. For instance, a uni-directional hollow jet wave flowing either with or counter to the direction of movement of the conveyor in the conveyor path 26 may be provided. Single or multiple solder waves can be covered in the manner disclosed herein. There may be two waves of the same type or different types, such as turbulent, non-turbulent, laminar flow, hollow waves, but not limited to these types. Figure 2 shows another embodiment with two solder waves, a first turbulent solder wave 50, followed by a non-turbulent smooth laminar flow solder wave 22 of the type shown in Figure 1. In the embodiment of Figure 2, two slots 40 are provided for the two solder waves 22 and 50. The conveyor path 26 for the circuit boards 24 is shown inclined. However, in other embodiments the conveyor path may be horizontal, as is illustrated in Figure 3. Beneath the cover plate 34, gas pipes 46 are shown on both sides of the two solder waves 22 and 50. Baffles 52 are provided underneath the gas pipes 46 to ensure that a majority of the gas is directed to flow through the slots 40 adjacent the solder waves 22 and 50 to blanket the solder waves. Whereas gas pipes 46 are shown on both sides of the solder wave, in another embodiment gas is supplied directly to the space under the cover plate in a sufficient quantity to ensure that no air remains in the space and gas passes out of the slot 40 on both sides of the solder wave.

Figure 3 shows another embodiment wherein a hood, enclosure or tunnel 54 is provided to contain a horizontal conveyor path 26. Curtains 56, either gas curtains or flaps, are shown at the entrance and exit to the tunnel 54 and heaters 58 are provided to preheat elements that pass along the conveyor path 26 within the tunnel 54. Whereas the conveyor path 26 is shown as being horizontal, it may be inclined upwards in the direction of travel. The tunnel or hood 54 may contain an inert gas atmosphere or a shield gas atmosphere that excludes oxygen which may or may not be different to that provided under the cover plate 34 above the gas in the reservoir 10. The pipes 46 still provide a gas to blanket the solder waves 22 and 50 and react with boards 24 passing through the solder waves. Heaters 58 are shown in Figure 3 to illustrate that a preheat may occur within an enclosed and controlled atmosphere. In another embodiment, a fluxer may be included prior to soldering, or other treatment may be applied to the boards prior to soldering.

Figure 4 illustrates an embodiment wherein gas knife jets 60 are shown positioned on both sides of a solder wave 22 directed to produce a jet or line of gas towards the slot 40 on each side of the solder wave 22. The cover 34 is shown having a seal 61 to the top side of the reservoir 10. In this embodiment, no skirt 36, as shown in Figures 1, 2 and 3, is provided and, instead the cover 34 seals to the rim of the reservoir 10. In the case of a tunnel 54 as shown in Figure 3 over a solder reservoir, the skirts 36 may be replaced with seals 61 around the rim of the reservoir 10.

Figure 5 illustrates another embodiment wherein a shroud 62 is shown surrounding a solder wave 22. The term "shroud" used herein is to distinguish the article from a cover. The shroud generally surrounds the solder wave and the area in the solder reservoir adjacent to it. A shroud is a type of cover in the present con text. Gas diffusers or gas pipes 46 provide gas within the shroud 62 which has skirts extending down below the level of solder in the reservoir 10. The gas flows upwards in the slot 40 on each side of the solder wave to blanket the solder wave. If gaps are provided between the shroud 62 and the ends of the solder wave, then gas flows from these gaps.

Figures 6 and 7 illustrate a cover plate suitable for a solder machine having two solder waves therein. The cover plate 34 has skirts 36 extending around all four sides and has two slots 40 for the solder waves to pass therethrough with a perimeter bead 64 extending around the peripheral outside edges of the slots, but not the inside edges. The cover plate is separate from but mates with a tray 66 having side plates 68 extending upwards. The side plates 68 have slots 70 therein for attachment for example to a conveyor support frame (not shown) of a soldering machine. The slots 70 allow limited vertical movement of the tray 66 and hence the cover plate 34 thus takes into account height adjustment of the solder reservoir 10 when required. The tray 66 remains in position attached to the conveyor support frame when the solder reservoir 10 with cover plate 34 thereon is lowered for maintenance purposes. The bead 64 acts as a guide to position the cover plate 34 so that it mates to the tray 66 when the solder reservoir 10 is raised up to a soldering position.

The gas pipes 46 are shown each having individual valves 72 so that the flow of gas can be controlled to each individual pipe. The gas is supplied through a manifold 74 for feeding to the pipes.

Figure 8 illustrates another embodiment of a cover plate wherein a first intermediate skirt 76 is shown between the two gas pipes 46 beneath the strip between the two slots 40. A further intermediate skirt 78 is shown adjacent the gas pipe 46 on the downstream side of the second solder wave and the cover plate 34 between the intermediate skirt 78 and the end skirt 36 has a series of holes 80 therein which extend into a channel 82 formed by a top plate 84 attached to the perimeter bead 64. The channel 82 directs gas to flow substantially horizontally towards the downstream solder wave to provide a jet or stream of gas. Thus two gas flows are provided, one through the gas pine 46 directly on the side of the solder wave and the other through the channel 82. By providing the substantially horizontal flow of gas, improved blanketing of certain gas waves is achieved. By utilizing valves 72 to the gas supply for individual gas pipes 46 different flows of gas can be arranged through the different slots on both sides of the solder waves thus ensuring that satisfactory blanketing of the solder wave and reaction with the board passing through the solder wave is attained.

Another embodiment is shown in Figure 8A, similar to that shown in Figure 8, wherein the top plate 84 is raised up providing a wider channel 82 and the gas is then able to flow in both directions. It has been found that when the gas flows only in one direction as shown in Figure 8, air which is entrained along the bottom surface of the top plate 84 is drawn into the jet or stream of gas. By providing for the gas to escape in both directions along the channel 82, less air is drawn into the stream of gas applied to the solder stream. This reduces air substantially around the solder wave and results in clean oxide free soldering.

Two hollow solder waves 90 are shown in Figure 9 directed towards each other from hollow wave nozzles 92 fitted into chimneys 94. The nozzles 92 are replaceable to permit different nozzles having different angles of projection, and different sized jets. The jets may be a plurality of round holes in a row, or may be a slit.

A cover plate 34 extends over the surface of the solder reservoir, and has skirts 36 extending down into the solder. Two slots 40 are provided in the cover plate 34 for the two hollow solder waves 90. In another embodiment the center cover skirts between the two slots may be considered as a second cover. Sliding damper plates 44 with sloped flanges 96 are positioned adjacent the sides of the slots, and machine screws 98 are provided to clamp the damper plates 44 in place. The damper plates 44 can be positioned to just clear the solder waves 90 and can be adjusted for different flows and angles of solder wave.

Gas pipes 46, preferably gas diffusers, are positioned below the cover plate 34 on each side of the solder waves 90. In another embodiment, although not always required, gas pipes 46A are placed underneath the solder waves so that gas blankets all sides of the solder wave. A divider sheet 100 is positioned in between the solder waves 90 extending up to the cover plate 34. Gas pipes 46 are placed on each side of the divider sheet 100 so that different gas flows can be applied to each solder wave.

Another embodiment of cover plate 34 for a single hollow solder wave 90 is shown in Figure 10. The cover plate has sloped lips or flanges 102 which extend to a complete cover 104 at each end of the solder wave. Thus the slot 40 is cut from the cover plate 34 without having damper plates 44. A separate curved cover 106 is provided over the gas pipe 46A under the solder wave 90. This curved cover 106 ensures the gas is deflected to the exposed surfaces of the solder reservoir and the undersurface of the solder wave.

The solder wave 22 of Figure 1 is similar to that shown in US,A,3,921,888, and in the embodiment shown in Figure 11, a separate diffuser arrangement 110 is located above the cover plate 34, downstream of the solder wave 22. The diffuser arrangement has three diffusers 112 therein and a series of substantially parallel flat vanes 114 which extend from a surrounding housing 116. Inert gas, preferably nitrogen, is expelled from the diffusers 112 and flows along the vanes 114 to produce a laminar flow of gas which is entrained by the gas exiting from under the cover plate 34. The vanes 114 are shown to be substantially horizontal and the conveyor path 26 sloped upwards. In another embodiment the conveyor path 26 is horizontal, and the vanes 114 are arranged either horizontally or sloping to ensure that there is laminar flow from the diffuser arrangement 110 to entrain with the laminar flow of gas from under the cover plate 34 and blanket the solder wave with a laminar flow of gas.

Elements, preferably circuit boards 24, are shown in Figure 12 being conveyed substantially horizontally on a conveyor 26 through a fluxer 118 for applying a flux to the wettable metallized surfaces to be coated or joined. The flux may be a no-clean flux which is a flux that after solder coating leaves a low level of residue that is both non-corrosive and non-conductive. This avoids the necessity of having to clean the flux residues off the surfaces after soldering. In some cases other types of flux are used and a solvent cleaner may be applied to clean the flux off the solder coated surfaces after the soldering step. One type of no-clean flux includes adipic acid, up to 3% by weight. Other types of no-clean flux are readily available on the market today.

After the fluxing step, which is only necessary in certain types of soldering under reduced oxygen environments, the elements 24 on the conveyor 26 pass through a heating stage. Preheaters 120 heat the elements 24 up to the required temperature for soldering. In one embodiment the preheating and fluxing stage occur in air, however in other embodiments both the preheating and the fluxing stage either individually or together may occur within a shield gas environment with reduced oxygen to prevent oxidizing of surfaces to be soldered.

A solder reservoir 10 has solder therein, the solder in one embodiment being a low dross solder. However, in other instances shield gases may permit the use of conventional solders without dross forming. Two solder waves 22A and 22B are shown, one after the other, both solder waves 22A and 22B illustrated are turbulent waves wherein solder is pumped by an additional pump 20 up through a nozzle 18. The solder pumps 20 are adjustable to permit adjustment of the heights of the solder waves 22A and 22B.

Two turbulent solder waves shown in Figure 12 are small waves from narrow nozzles and easy to control. The two pumps 20 can be varied to control the height of the solder waves 22A and 22B for different types of elements 24 to be soldered. The height of the elements 24 above the solder waves 22A and 22B can also be adjusted by positioning the elements 24 at a desired elevation on the conveyor 26.

Shrouds 34, or cover plates similar to those disclosed in the previous figures, are provided over the solder reservoir 10 leaving slots 40 for the solder waves to exit. The slots 40 leave gaps between the edge of the slot 40 and the solder wave 22A or 22B and gas diffusers 46 are positioned on each side of the solder wave below the shroud 34 so that the space under the shroud and above the solder level in the reservoir 10 is completely blanketed with shield gas. The gaps provide a sufficient flow of shield gas to cover or blanket the side of the solder wave, and at the same time prevent air from entering the shroud. The size of the gaps are preferably not wider than necessary to keep the shield gas flow as low as possible, and still provide the necessary blanketing. There is an escape of gas through the slots 40 in the gaps on both sides of the solder waves 22A and 22B. The gas is shield gas and preferably has less than 5% oxygen. In a preferred embodiment the gas is nitrogen and blankets solder in the solder reservoir 10 and also blankets both sides of the solder wave when an element 24 is passing through the wave.

The shroud 34 has skirts 36 on all sides extending down into the solder in the solder reservoir 10. A divider skirt 100 in the center of the shroud 34 also extends down into the solder wave, thus providing two separate spaces, one for each solder wave. This permits the flow of gas into the two spaces to be controlled separately. In one case a higher pressure may be desired or greater flow may be desired in one of the spaces.

After the elements or boards 24 pass through the solder waves 22A and 22B, a gas knife 122, preferably of the type shown in US,A,4,679,720 or 4,995,411, provides a linear jet of gas which is directed against the underside of the element 24 and blows off any excess solder. The gas knife may be heated or, alternatively, gas entering the gas knife may be heated. Furthermore the position of the gas knife 122 can be varied vertically and horizontally, the knife may be rotated so the gas projects at different angles. This permits adjustments to be made for different types and sizes of elements 24 and boards. The gas may be a shield gas with reduced oxygen or, alternatively, may be air.

Figure 13 shows another embodiment wherein the conveyor 26 is sloped upwards. Different types of solder waves 22A and 22B are illustrated wherein a first solder wave 22A is a turbulent solder wave and the second one 22B is a non-turbulent smooth laminar flow solder wave of the type shown in US,A,3,921,888.

One, two or more solder waves may be provided, the solder waves may be of all wave configurations including turbulent, streamline, hollow jet and combinations of different configurations. The list of configurations is in no way limiting.

The gas knife 122 is shown mounted on the shroud 34 after the second solder wave 22B, projecting upwards to ensure that a linear jet blows against the underside of the element as it passes. Solder blown off the element may be arranged to return to the solder reservoir.

The shroud 34 together with the gas knife 122 may form part of a retro package for installation on existing solder wave equipment. The shroud 34 is made to fit over the solder reservoir 10 and the elongated slots 40 are provided to fit the solder wave or solder waves. Whereas two solder waves are shown in the drawings, more than two solder waves may be used if required or, alternatively a single solder wave may also be used.

An enclosure 124 or tunnel is shown in Figure 14 enclosing the conveyor 26 as elements or boards 24 are conveyed past the fluxer 118 and the preheaters 120. An entrance curtain 126 and an exit curtain 128 are provided to restrict gas from escaping from the enclosure 124. A shield gas environment may be maintained within the enclosure 124. Figure 15 shows an enclosure 130, or hood positioned over the solder pot 10 only without a gas knife, and Figure 16 shows an extended tunnel 132 extending over the conveyor 26 from the fluxer 114, the preheaters 120 and the solder reservoir 10. The enclosure 132 also extends over a gas knife 122 positioned directly after the solder reservoir 10.

A different solder nozzle arrangement 18 is shown in Figure 17 with guides 134 on both sides of the nozzle. The solder wave has a smooth streamline flow falling back on both inlet and exit of the nozzle 18 and guided back into the solder reservoir by the guides 134. This type of solder wave is sometimes defined as a bi-directional solder wave.

Adjustable strips 136 are mounted on the shroud 34 adjacent the slots 40 to permit the gaps to be varied for different wave heights. Provision is also made in one embodiment to raise or lower either the conveyor or the solder pot so the height between the solder wave and the conveyor line 26 can be varied.

The diffusers 46 for shield gas supply, preferably nitrogen, may be replaced with drilled tubes. The shield gas supply can be turned off with the solder wave when no boards are present as the shield effect is almost instantaneous. Intermittent use of shield gas reduces gas consumption.

Figure 18 shows a solder wave arrangement with a turbulent first solder wave 22A and a smooth streamline bi-directional second solder wave 22B similar to that shown in Figure 17. The conveyor line 26 is shown sloped but in another embodiment may be substantially horizontal. A vibration blade 138 attached by a rod 140 to a vibrator 142 provides a vibration to the wave in accordance with US,A,4,684,056 (Reissue patent Re 33,197).

The bi-directional solder wave 22B has a smooth top solder surface. When an element or board 24 passes through the solder wave 22B the shield gas passes through the gaps on each side of the wave and shields or inerts the space between the solder wave 22B, the shroud 34 and the board 24.

The embodiment shown in Figure 17 has the shroud 34 attached to the side of the solder reservoir 10 while in the embodiment shown in Figure 18, the shroud 34 has skirts 36 extending down into the solder to provide a seal and ensure the space under the shroud can be sealed to prevent entry of air into the shielded atmosphere.

In Figure 19, an enclosure 132 is provided over the solder reservoir 10 which is sealed to the top edge of the solder reservoir 10. The enclosure 132 or tunnel contains shield gas that passes up through slots 40 from under the shrouds 34A and 34B. In the embodiment shown, a first shroud 34A surrounds the first solder wave 22A and a second shroud 34B surrounds the second solder wave 22B. The separate shrouds permit individual shield gas supply. The shroud top surfaces are flat to trap shield gas within.

Figure 20 shows a bi-directional solder wave 22 with a gas knife 122 positioned on the exit side of the wave 22 under the shroud 34 to direct gas through the slot 40 to blanket the wave. When a board 24 is passing through the wave the gas knife diverts gas, either shield gas, or in certain cases air, to blanket the space where the board leaves the solder wave. This protects the board with the fresh solder surfaces thereon and the solder wave.

Whereas Figure 19 shows an enclosure 132 over two solder waves, in Figure 21 two separate top covers 144 are provided over the shrouds 34A and 34B and solder waves 22A and 22B, the top covers 144 not extending for the full lengths of the shrouds 34A and 34B. The top covers 144 help to trap shield gas passing up through the slots 40 and thus reduce oxide formation on the crest of the solder waves. The top of the top covers 144 are preferably glass for viewing the wave and the sides 146 are adjustable for height and are made from flexible material to act as curtains. The sides 146 may be pushed aside when circuit boards are conveyed on the conveyor path 26.

The conveyor path is shown inclined upwards but in another embodiment is substantially horizontal. The second solder wave 22B is a bi-directional wave, the nozzle 18 with the plates 134 is adjustable vertically to adjust wave height. Wave flow is adjustable by means of the solder pump 20. With a combination of varying wave height and wave flow, the inclination of the conveyor path 26 is also adjustable.

In the embodiment shown in Figure 22, the circuit board 24 is supported on fingers 150 from the conveyor 26. A gas knife 122 is positioned on the exit side of the wave 22B and may be pivoted to adjust the direction of gas flow from the gas knife 122. A rubber seal flap 152 is connected to the side of the shroud 34B extending down to the skirt 36 in the solder reservoir. The seal flap is made of suitable material that is flexible, so the gas knife may be pivoted to a preferred location to selectively direct gas, and prevents gas exiting from under the shroud 34B downstream of the gas knife 122.

## Claims

1. An apparatus for wave soldering an element (24) comprising:
a solder reservoir (10) adapted to contain molten solder and having at least one solder wave nozzle (18) projecting therefrom;
pump means (20) for forming a solder wave (22) from the nozzle (18);
cover means (34) for covering at least a portion of the reservoir (10) having at least one longitudinal slot (40) for the solder wave (22) to pass therethrough;
supply means (46) for supplying pressurized gas to the underside of the cover means (34), the gas being permitted to pass upwards through the slot (40) on both sides of the solder wave (22) and provide a gas blanket over the solder wave (22), and
conveyor means (26) for moving the element (24) in a predetermined path over the cover means (34) ensuring at least a portion of the element (24) passes through the solder wave (22).

2. The apparatus for wave soldering an element (24) according to claim 1 wherein the cover means comprises a cover plate (34) extending over the reservoir (10) and having skirts (36) at the edges of the cover plate (34) to extend down below a level representing a solder level in the solder reservoir (10).

3. The apparatus for wave soldering an element (24) according to claim 1 or 2, wherein the cover means comprises a cover plate (34) having raised lips (42) on both sides of the longitudinal slot.

4. The apparatus for wave soldering an element (24) according to any of claims 1, 2 or 3 wherein the supply means for supplying pressurized gas includes gas diffusers (46) extending on both sides of the solder wave (22) beneath the longitudinal slot (40) in the cover means (34).

5. The apparatus for wave soldering an element (24) according to any of claims 1 to 4 wherein two solder wave nozzles (18) project from the solder reservoir (10), one nozzle providing a turbulent wave and the other nozzle providing a non-turbulent wave, the cover means (34) having two longitudinal slots (40) for the waves.

6. The apparatus for wave soldering an element (24) according to any of claims 1 to 5 wherein the conveyor means moves the element in a substantially horizontal path.

7. The apparatus for wave soldering an element (24 according to any of claims 1 to 5 wherein the conveyor means (26) moves the element (24) in an upward inclined path.

8. The apparatus for wave soldering an element (24) according to any of claims 1 to 7 including a tunnel means (54) through which the conveyor means (26) moves the element (24) in the predetermined path.

9. The apparatus for wave soldering an element (24) according to any of claims 1 to 8 including a gas knife means (122) to project a linear jet of gas onto the element (24) after the element (24) passes through the solder wave (22) to remove excess solder from the element (24).

10. A process for wave soldering an element (24) comprising the steps of:
projecting a solder wave (22) from a solder nozzle (18) above a solder reservoir (10) and through a slot (40) in a cover means (34);
providing a shield gas supply (46) underneath the cover means (34) on both sides of the solder wave (22) to pass through the slot (40) on both sides of the solder wave (22) and blanket the solder wave (22), and
passing the element (24) in a predetermined path above the cover means (34) so that at least a portion of the element (24) passes through the solder wave (22) while being blanketed by the shield gas.

11. The process of wave soldering an element (24) according to claim 10 including the step of projecting a linear jet of gas from a gas knife (122) onto the element (24) after the element (24) passes through the solder wave (22) to remove excess solder from the element (24).

12. The process of wave soldering an element (24) according to claim 10 or 11 wherein the shield gas is nitrogen containing oxygen in the range of 1 ppm to 50,000 ppm (5%).

13. The process of wave soldering an element (24) according to claim 10 or 11 wherein the shield gas is nitrogen containing oxygen in the range of about 10 to 1,000 ppm.

14. The process of wave soldering an element (24) according to any of claims 10 to 13 wherein the shield gas is nitrogen produced by membrane technology.

15. The process for wave soldering an element (24) according to claim 12 wherein the solder is a low dross solder.

16. The process for wave soldering an element (24) according to claim 15 wherein the low dross solder contains from about 10 to 1000 ppm phosphorous.

## Patentansprüche

1. Vorrichtung zum Wellenlöten eines Elements (24), die folgendes umfasst:
einen Lotspeicher (10), der geschmolzenes Lot enthalten kann und der wenigstens eine daraus hervorragende Lotwellendüse (18) hat;
ein Pumpmittel (20), um eine Lotwelle (22) von der Düse (18) zu bilden;
ein Abdeckmittel (34), um wenigstens ein Teil des Speichers (10) abzudecken, mit wenigstens einem Längsschlitz (40), so dass die Lotwelle (22) dadurch geht;
ein Liefermittel (46), um Druckgas zur Unterseite des Abdeckmittels (34) zu liefern, wobei dem Gas gestattet wird, auf beiden Seiten der Lotwelle (22) durch den Schlitz (40) nach oben zu gehen, und eine Gasdecke über der Lotwelle (22) zu liefern, und
ein Fördermittel (26), um das Element (24) in einem vorbestimmten Weg über das Abdeckmittel (24) zu bewegen, was sicherstellt, das wenigstens ein Teil des Elements (24) durch die Lotwelle (22) geht.

2. Vorrichtung zum Wellenlöten eines Elements (24) nach Anspruch 1, in der das Abdeckmittel eine Abdeckplatte (34) umfasst, die sich über den Speicher (10) erstreckt, und Säume (36) an den Kanten der Abdeckplatte (34) hat, um sich nach unten unter eine Höhe zu erstrecken, die eine Löthöhe in dem Lotspeicher (10) darstellt.

3. Vorrichtung zum Wellenlöten eines Elements (24) nach Anspruch 1 oder 2, in der das Abdeckmittel eine Abdeckplatte (34) mit angehobenen Ansätzen (42) auf beiden Seiten des Längsschlitzes umfasst.

4. Vorrichtung zum Wellenlöten eines Elements (24) nach einem der Ansprüche 1, 2 oder 3, in der das Liefermittel zum Liefern von Druckgas Gaszerstreuungsgeräte (46) einschliesst, die sich auf beiden Seiten der Lotwelle (22) unter dem Längsschlitz (40) in dem Abdeckmittel (34) erstrecken.

5. Vorrichtung zum Wellenlöten eines Elements (24) nach einem der Ansprüche 1 bis 4, in der zwei Lotwellendüsen (18) von dem Lotspeicher (10) hervorragen, wobei eine Düse eine wirbelnde Welle liefert, und die andere Düse eine wirbelfreie Welle liefert, wobei das Abdeckmittel (34) zwei Längsschlitze (40) für die Wellen hat.

6. Vorrichtung zum Wellenlöten eines Elements (24) nach einem der Ansprüche 1 bis 5, in der in dem das Fördermittel das Element in einem im wesentlichen waagerechten Weg bewegt.

7. Vorrichtung zum Wellenlöten eines Elements (24) nach einem der Ansprüche 1 bis 5, in der das Fördermittel (26) das Element (24) in einem nach oben geneigten Weg bewegt.

8. Vorrichtung zum Wellenlöten eines Elements (24) nach einem der Ansprüche 1 bis 7, die ein Tunnelmittel (54) einschliesst, durch das das Fördermittel (26) das Element (24) in dem vorbestimmten Weg bewegt.

9. Vorrichtung zum Wellenlöten eines Elements (24) nach einem der Ansprüche 1 bis 8, das ein Gasmessermittel (122) einschliesst, um einen linearen Gasstrahl auf das Element zu stossen, nachdem das Element durch die Lotwelle (22) geht, um überschüssiges Lot von dem Element (24) zu entfernen.

10. Verfahren zum Wellenlöten eines Elements, das die folgenden Schritte umfasst:
eine Lotwelle (22) wird von einer Lotdüse (18) über einem Lotspeicher (10) und durch einen Schlitz (40) in einem Abdeckmittel gestossen;
ein Schutzgasvorrat (46) wird unter dem Abdeckmittel (34) auf beiden Seiten der Lotwelle (22) geliefert, um durch den Spalt (40) auf beiden Seiten der Lotwelle (22) zu gehen und die Lotwelle (22) abzudecken, und
das Element (24) wird in einem vorbestimmten Weg über das Abdeckmittel (34) gegeben, so dass wenigstens ein Teil des Elements (24) durch die Lotwelle (22) geht, während es von dem Schutzgas abgedeckt wird.

11. Verfahren zum Wellenlöten eines Elements (24) nach Anspruch 10, das den Schritt einschliesst, einen linearen Gasstrahl von einem Gasmesser (122) auf das Element (24) zu stossen, nachdem das Element (24) durch die Lotwelle (22) geht, um überschüssiges Lot von dem Element (24) zu entfernen.

12. Verfahren zum Wellenlöten eines Elements (24) nach Anspruch 10 oder 11, in dem das Schutzgas Stickstoff ist, der Sauerstoff in dem Bereich von ungefähr 1 ppm bis 50000 ppm (5%) enthält.

13. Verfahren zum Wellenlöten eines Elements (24) nach Anspruch 10 oder 11, in dem das Schutzgas Stickstoff ist, der Sauerstoff in dem Bereich von ungefähr 10 bis 1000 ppm enthält.

14. Verfahren zum Wellenlöten eines Elements (24) nach einem der Ansprüche 10 bis 13, in dem das Schutzgas durch Membrantechnologie hergestellter Sickstoff ist.

15. Verfahren zum Wellenlöten eines Elements (24) nach Anspruch 12, in dem das Lot ein Lot mit geringem Abfall ist.

16. Verfahren zum Wellenlöten eines Elements (24) nach Anspruch 15, in dem das Lot mit geringem Abfall von ungefähr 10 bis 1000 ppm Phosphor enthält.

## Revendications

1. Appareil de brasage à la vague d'un élément (24) comportant:
un réservoir à métal de soudure (10) adapté pour recevoir le métal en fusion et ayant au minimum une buse de vague de brasage (18) qui en est en saillie;
un moyen à pompe (20) pour former une vague de brasage 12) à partir de la buse (18);
un moyen de capotage (34) pour couvrir au minimum une portion du réservoir (10) ayant au minimum une fente longitudinale (40) permettant à la vague de brasage (22) de passer au travers;
un moyen d'apport (46) amenant le gaz sous pression au dessous du capotage (34), le gaz pouvant passer par la fente (40) des deux côtés de la vague de brasage (22) et de monter vers le haut et assurer une nappe sur la vague de brasage (22), et
un moyen de transport à bande (26) pour déplacer l'élément (24) le long d'un chemin prédéfini en surface dudit capotage (34) assurant au minimum le passage d'une portion de l'élément (24) par la vague de brasage (22).

2. L'appareil de brasage à la vague d'un élément (24) suivant la revendication 1, selon laquelle le capotage comporte une plaque formant couvercle (34) couvrant le réservoir (10) et comportant une jupe (36) aux bords de la plaque couvercle (34) pour descendre au dessous d'un niveau représentant un niveau de métal de brasage dans le réservoir à métal de brasage (10).

3. L'appareil de brasage à la vague d'un élément (24) suivant la revendication 1 ou 2, selon laquelle le capotage comporte une plaque couvercle (34) ayant des lèvres de bordure relevées (42) des deux côtés de la fente longitudinale.

4. L'appareil de brasage à la vague d'un élément (24) suivant l'une ou l'autre des revendications 1, 2 ou 3, selon laquelle le moyen d'apport amenant le gaz sous pression prévoit des diffuseurs de gaz (46) s'allongeant des deux côtés de la vague de métal de brasage (22) sous la fente longitudinale (40) de la plaque couvercle (34).

5. L'appareil de brasage à la vague d'un élément (24) suivant l'une ou l'autre des revendications 1 à 4, selon laquelle deux buses (18) à métal de brasage sont en saillie depuis le réservoir à métal de brasage (10), l'une des buses assurant une vague turbulente et l'autre buse assurant une vague sans turbulence, la plaque couvercle (34) comportant deux fentes longitudinales (40) pour les vagues.

6. L'appareil de brasage à la vague d'un élément (24) suivant l'une ou l'autre des revendications 1 à 5, selon laquelle le moyen à bande de transport déplace l'élément le long d'un parcours essentiellement horizontal.

7. L'appareil de brasage à la vague d'un élément (24) suivant l'une ou l'autre des revendications 1 à 5, selon laquelle le moyen à bande de transport (26) déplace l'élément (24) le long d'un parcours incliné vers le haut.

8. L'appareil de brasage à la vague d'un élément (24) suivant l'une ou l'autre des revendications 1 à 7, comportant un moyen à tunnel (54) au travers duquel le convoyeur passe (26) en déplaçant l'élément le long du chemin prédéfini.

9. L'appareil de brasage à la vague d'un élément (24) suivant l'une ou l'autre des revendications 1 à 8, comportant un moyen couteau à gaz (122) pour projeter un jet linéaire de gaz sur l'élément (24) après le passage dudit élément (24) par la vague de métal de brasage (22) afin d'éliminer de l'élément (24) tout métal de brasage excédentaire.

10. Procédé de brasage à la vague d'un élément comportant les phases suivantes:
projection d'une vague de métal de brasage (22) depuis une buse à métal de brasage (18) située au dessus du réservoir (10) et au travers d'une fente (40) dans une plaque couvercle (34);
amenée fournissant le gaz formant écran (46) sous la plaque couvercle (34) des deux côtés de vague de métal de brasage (22) et une nappe sur la vague de métal de brasage (22), et
passage de l'élément (24) le long d'un parcours prédéterminé au dessus de la plaque couvercle (34) de telle façon qu'au minimum une portion de l'élément (24) passe par la vague de métal de brasage (22) lors de son nappage par l'écran de gaz.

11. Procédé de brasage à la vague d'un élément (24) selon la revendication 10, comportant la phase de projection d'un jet linéaire de gaz à partir d'un couteau à gaz (122) sur l'élément (24) après le passage de l'élément (24) par la vague de métal de brasage (22) pour éliminer le métal de brasage excédentaire de l'élément (24).

12. Procédé de brasage à la vague d'un élément (24) selon la revendication 10 ou 11, suivant laquelle le gaz d'écran est l'azote contenant de l'oxygène dans la fourchette de 1 à 50.000 ppm (5%).

13. Procédé de brasage à la vague d'un élément (24) selon la revendication 10 ou 11, suivant laquelle le gaz d'écran est l'azote contenant de l'oxygène dans la fourchette de 10 à 1.000 ppm.

14. Procédé de brasage à la vague d'un élément (24) selon les revendications 10 ou 11, suivant lesquelles le gaz d'écran est l'azote produit suivant la technologie à diaphragme.

15. Procédé pour le brasage à la vague d'un élément (24) selon la revendication 12, suivant laquelle le métal de brasage est un métal à faible teneur de scories.

16. Procédé pour le brasage à la vague d'un élément (24) selon la revendication 15, suivant laquelle le métal de brasage à faible teneur de scories contient environ 10 à 1.000 ppm de phosphore.
